Europäisches Patentamt

European Patent Office

Office européen des brevets

(19)

(11) Veröffentlichungsnummer: **0 311 775 B1**

(12) # EUROPÄISCHE PATENTSCHRIFT

(45) Veröffentlichungstag der Patentschrift: **27.12.91**

(51) Int. Cl.⁵: **A01F 15/07**

(21) Anmeldenummer: **88113707.9**

(22) Anmeldetag: **23.08.88**

(54) **Verfahren zum Herstellen von Ernte-gut-Rollballen sowie Vorrichtung zum Durchführen des Verfahrens.**

(30) Priorität: **14.10.87 DE 3734850**

(43) Veröffentlichungstag der Anmeldung:
**19.04.89 Patentblatt 89/16**

(45) Bekanntmachung des Hinweises auf die
Patenterteilung:
**27.12.91 Patentblatt 91/52**

(84) Benannte Vertragsstaaten:
**AT BE DE ES FR GB IT NL SE**

(56) Entgegenhaltungen:
**EP-A- 299 776**
**DE-C- 3 710 550**
**US-A- 4 542 617**

(73) Patentinhaber: **P.J. Zweegers en Zonen Land-bouwmachinefabriek B.V.**
**Nuenenseweg 165**
**NL-5667 KP Geldrop(NL)**

(72) Erfinder: **Quataert, Petrus Maria**
**Berg 73**
**NL-5671 CB Nuenen(NL)**

(74) Vertreter: **Patentanwälte Grünecker, Kinkel-dey, Stockmair & Partner**
**Maximilianstrasse 58**
**W-8000 München 22(DE)**

**Beschreibung**

Die Erfindung betrifft ein Verfahren der im Oberbegriff des Patentanspruchs 1 angegebenen Art sowie eine Vorrichtung der im Oberbegriff des Anspruchs 3 angegebenen Art.

Bei einem aus der DE-A-34 15 310 bekannten Verfahren erfolgt das Zwischenspeichern des kontinuierlich aufgenommenen Erntegutstrangs in einem durchgehenden Schritt und außerhalb der Preßkammer in einer Vorkammer. In der Vorkammer wird ein Vorballen hergestellt, der erst dann in die Preßkammer überführt wird, wenn der fertige Rollballen in das Bindemittel eingebunden und aus der Preßkammer ausgeworfen ist, und sobald die Preßkammer wieder verschlossen wurde. Die Vorkammer benötigt mit ihren den Vorballen bildenden Elementen eine bestimmte Größe, um das Volumen des während der Zeitspanne des Zwischenspeicherns aufgenommenen Ernteguts verkraften zu können. Dies bedingt aber einen schweren und zumindest nach oben hohen Aufbau der Rollballenpresse, der nachteilig ist.

Bei einem aus der DE-C-33 11 330 bekannten Verfahren dieser Art wird zunächst die Zufuhr des Ernteguts zur Preßkammer gestopt, bis das Ende des Umhüllungsmaterials sich im Bereich der Eintrittsöffnung in die Preßkammer mit dem anderen Ende des Umhüllungsmaterials auf dem fertigen Rollballen überlappt. Danach wird der fertiggewickelte und umhüllte Rollballen nach hinten abgeworfen, wobei die Preßkammer geöffnet wird. Nach Auswurf des Rollballens aus der Preßkammer wird der in der Vorkammer über den Zeitraum des Zwischenspeicherns gebildete Vorballen bei einer Umkehrung der Drehrichtung in die Preßkammer gefördert. Die Vorkammer führt zu einem schweren und hohen Aufbau der Rollballenpresse.

Bei beiden bekannten Verfahren läßt sich der Vorballen zu keiner Zeit bei noch zumindest teilweise in der Preßkammer befindlichem, fertiggewickelten und umhüllten Rollballen aus der Vorkammer in die Preßkammer überführen, weil er direkt hinter dem ausgeworfenen, fertigen Rollballen durch die Öffnung der Preßkammer nach außen fallen könnte oder durch die Haftung am fertigen Rollballen von diesem beim Auswerfen mit nach außen gezogen würde. Der relativ großvolumige Vorballen würde aufgrund der Schwerkraft unabhängig von einer eventuellen Wickelrichtungsumkehr in der Preßkammer sofort den Weg nach hinten durch die Öffnung der Preßkammer suchen.

Bei einem aus der DE-A-24 43 838 bekannten Verfahren wird der fertiggewickelte Rollballen in das Bindemittel eingebunden und dann ausgeworfen. Damit das Einbinden und Auswerfen ungestört durchführbar ist, hält die Rollballenpresse an bzw. wird über diese Zeitspanne die Erntegutzuführung unterbrochen. Dies bedingt jedoch einen diskontinuierlichen Betrieb der Rollballenpresse, der in der Praxis besonders nachteilig ist. Vorteilhafterweise benötigt diese Rollballenpresse zur Durchführung des Verfahrens nur einen relativ kurzen Zuführkanal, so daß ihre Gesamtabmessungen kompakt sind und die Rollballenpresse wendig ist und von einem kleinen Schlepper gezogen werden kann.

Der Erfindung liegt die Aufgabe zugrunde, ein Verfahren der vorstehend erwähnten Art anzugeben, das sich in einer baulich einfachen, wendigen und leichtgewichtigen Rollballenpresse bei kontinuierlichem Betrieb mit hoher Arbeitsleistung durchführen läßt, sowie eine Rollballenpresse zu schaffen, die trotz eines einfachen und leichtgewichtigen Aufbaus in der Lage ist, bei kontinuierlichem Betrieb mit hoher Arbeitsleistung zu arbeiten.

Die gestellte Aufgabe wird mit dem durch die kennzeichnenden Merkmale des Patentanspruchs 1 angegebenen Verfahren gelöst.

Mit dem im ersten Schritt im Zufuhrkanal unter Komprimieren des Ernteguts ablaufenden Zwischenspeichern wird das störungsfreie Schließen des Bindemittels auch dann gewährleistet, wenn das Bindemittel über einen relativ großen Umfangsbereich des Rollballens überlappt wird. Der Zufuhrkanal kann durch die in das Erntegut eingebrachte Verdichtung kompakt sein, was zu kompakten Abmessungen der Vorrichtung führt. Da während des zweiten Schritts die Zwischenspeicherung vom Rollballen getrennt auch in der Preßkammer erfolgt, wird insgesamt ein relativ langer Zeitpuffer geschaffen, um den Rollballen auszuwerfen und die Klappe wieder ordnungsgemäß zu schließen, weil das Erntegut beim Zwischenspeichern im zweiten Schritt am Herausfallen aus der Klappenöffnung gehindert ist. Es wird bei diesem Verfahren sozusagen das Volumen des ohne spezielle Vorkammer ausgebildeten Zufuhrkanals aufgrund der Kompression des Ernteguts für den ersten Schritt der Zwischenspeicherung und dann ein Teil des Volumens der Preßkammer für den zweiten Schritt der Zwischenspeicherung genutzt. Der kontinuierlich geförderte Erntegutstrang wird in beiden Zwischenspeicher-Schritten nicht sich selbst überlassen, sondern in beiden Schritten gesteuert behandelt, damit das Wickeln des neuen Rollballens übergangslos begonnen werden kann, sobald die Preßkammer geschlossen ist. Weil zum Zwischenspeichern im zweiten Schritt die Preßkammer genutzt wird, dabei aber das Erntegut nicht aus der Klappenöffnung herausfallen kann, lassen sich das Auswerfen des Rollballens und das Schließen der Klappe langsam und damit schonend für den Rollballen und die beweglichen Komponenten der Vorrichtung durchführen, weil im zweiten Zwischenspeicherschritt auch ohne Vorkammer die relativ große Erntegutmenge problemlos verkraftet wird.

Der mit diesem Verfahren erreichbare Vorteil ist der Wegfall einer Vorkammer zum Bilden eines Vorballens, weil über den relativ kurzen ersten Schritt der Zwischenspeicherung das Volumen des im wesentlichen konventionell dimensionierten Zuführkanals ausreicht, trotz kontinuierlicher Aufnahme des Ernteguts dieses, unter Komprimieren, um Platz zu sparen, solange zwischenzuspeichern, bis der Einlaß zur Preßkammer wieder geöffnet ist und sich der zweite Zwischenspeicherschritt innerhalb der Preßkammer anschließt. Der Wegfall der Vorspeicherkammer oberhalb des Zuführkanals führt zu einer baulich einfachen und trotz der kontinuierlichen Betriebsweise leichtgewichtigen, wendigen Rollballenpresse, d.h., daß die Rollballenpresse nicht größer und schwerer wird als eine Rollballenpresse für diskontinuierlichen Betrieb, etwa wie in der DE-A-24 43 838 beschrieben, die jedoch im Betrieb immer wieder angehalten werden muß, bis ein fertiger Rollballen eingebunden, ausgeworfen und die Preßkammer wieder verschlossen ist.

Eine zweckmäßige Verfahrensvariante geht aus Anspruch 2 hervor. Im Hinblick auf ein möglichst übergangsloses Wickeln des nächsten Rollballens ist es zweckmäßig, auch im zweiten Schritt der Zwischenspeicherung das Erntegut zu komprimieren. Außerdem wird mit dieser Maßnahme erreicht, daß die insgesamt zwischengespeicherte Erntegutmenge, die zum Erreichen eines ausreichend bemessenen Zeitpuffers relativ groß sein kann, nur einen Teil des Fassungsvermögens der noch offenen Preßkammer beansprucht.

Die Erfindung ist weiterhin auf eine Vorrichtung gemäß dem Oberbegriff des Patentanspruchs 3 gerichtet, die sich besonders zur Durchführung des Verfahrens eignet.

Bei der aus der DE-C-33 11 330, Fig. 1, bekannten Vorrichtung ist das zweite Förderorgan ein Picker, der mit Rechenzinken quer durch den Zuführkanal greift und das vom ersten Förderorgan aufgenommene Erntegut in unregelmäßigen Schüben durch den Einlaß in die Preßkammer fördert. Beim Schließen des Bindemittels wird er in der Staustellung gehalten, damit die Zufuhr zur Preßkammer unterbrochen wird, bis das Bindemittel geschlossen und ausreichend überlappt ist. Für das während dieser Zeitspanne weiterhin vom ersten Förderorgan aufgenommene Erntegut ist eine Zwischenspeicherkammer im Vorderteil der Vorrichtung vorgesehen. Das erste Förderorgan kann mit seinen Zinken jedoch keine nennenswerte Verdichtung im Erntegut erzeugen, so daß zum Unterbringen einer ausreichend großen Erntegutmenge die Vorkammer sehr groß bemessen werden muß, was die Gesamtabmessungen der Vorrichtung in Längsrichtung und auch das Gesamtgewicht unzweckmäßig in die Höhe treibt. Die Wickelrichtung in der Preßkammer ist so gewählt, daß das aus dem Einlaß kommende Erntegut sogleich nach oben gefördert wird, um nicht durch die offene Klappenöffnung ins Freie geworfen zu werden. Durch diese Wickelrichtung ist ferner der Nachteil gegeben, daß bei wachsenden Rollballen der Picker einzelne Erntegut-Chargen an den Rollen-Umfang andrückt, damit diese nach oben mitgenommen werden, denn der Umfang des Rollballens schließt den Einlaß und bewegt sich nahezu entgegengesetzt zur Zuführrichtung des Ernteguts. Dadurch kann es im Bereich des Einlasses zu Stauungen kommen, die die Arbeitsleistung der Vorrichtung beeinträchtigen. Durch das chargenweise Zuführen des Ernteguts bei wachsendem Rollballen wird dieser inhomogen und unrund, woraus Wechselbelastungen für die Preßelemente resultieren, die eine sehr stabile und schwere Lagerung benötigen. Demgegenüber liegt der Erfindung die Unteraufgabe zugrunde, eine Vorrichtung der vorstehend genannten Art dahingehend zu verbessern, daß sie baulich einfacher, kompakter und leistungsfähiger ist, als die bekannte. Dieses Ziel wird mit den im kennzeichnenden Teil des Anspruchs 3 angegebenen Merkmalen erreicht. Die Preßwalze fördert das vom ersten Förderorgan aufgenommene und kontinuierlich bereitgestellte Erntegut in einen kräftigen und gleichmäßigen Strang in die Preßkammer, was zu einem homogenen Aufbau des Rollballens führt. Beim Zwischenspeichern in der Staustellung des Trennelementes erzeugt die Preßwalze und nicht das für die Aufnahme verantwortliche erste Förderorgan im Erntegut eine so starke Verdichtung, daß mit einem relativ kurzen und engen Zuführkanal, so wie er für diskontinuierlich arbeitende Rollballenpressen üblich ist, ausgekommen wird. Durch die Kompression seitens der Preßwalze kann im Zuführkanal trotzdem eine so große Menge an Erntegut zwischengespeichert werden, daß das erste Förderorgan unbehindert weiterhin aufnehmen kann und auch das Bindemittel zuverlässig geschlossen wird. Für das Zwischenspeichern wird dann jedoch sofort mehr Platz geschaffen, wenn das Bindemittel geschlossen ist, der Rollballen im Auswurfvorgang begriffen und anschließend auch die Klappe geschlossen wird, weil das durch den Einlaß in die Preßkammer bewegte Trennelement den Zwischenspeicher in die Preßkammer verlegt, jedoch ohne daß Erntegut aus der Klappenöffnung fallen oder am im Auswurf begriffenen Rollballen haften könnte. Das mit dem Erntegut in die Preßkammer gelangende Trennelement erzeugt eine wünschenswerte Auswurfkomponente aller Rollballen. Es sind mit der Preßwalze eine hohe Zufuhrförderleistung beim Wickeln und damit eine hohe Arbeitsleistung der Vorrichtung möglich. Das Volumen der Rollballen kann groß gewählt werden, auch wenn der Zufuhrkanal klein, und kompakt und auch die Einlaßöffnung wünschenswert klein bemessen sind. Ist die Klappe wieder geschlossen, so kann das Wickeln des neuen Rollballens wieder unverzüglich fortgesetzt werden. Da das Trennelement das Erntegut bis dahin am Herausfallen hindert, reicht der geschaffene Zeitpuffer zum schonenden Auswerfen des Rollballens und zum langsamen Schließen der Klappe aus. Die Wickelrichtung in der Preßkammer spielt vorteilhaft keine Rolle. Sie kann so gewählt werden, wie es für die Konstruktion der Vorrichtung und die Qualität der Rollballen zweckmäßig ist. Es kann auch eine Wickelrichtung gewählt werden, bei der der Erntegutstrang annähernd tangential zum Rollballen und in Verlängerung des tiefliegenden Zuführkanals in die Preßkammer gelangt, was die beim Stand der Technik nachteilige Umlenkung des Erntegutstranges nach oben vermeidet und die Formung des Anfangswickelkerns des neuen Rollballens begünstigt.

Selbst wenn nur ein kurzer Weg vom Einlaß in die Preßkammer bis zur Öffnung der Klappe vorhanden ist, verhindert das Trennelement auch bei langsamen Schließen der Klappe das Herausfallen von Erntegut. Dieses Prinzip der Zwischenspeicherung mit Hilfe der Preßwalze und des Trennelementes kann ferner sowohl bei in der Größe festen als auch bei in der Größe variablen Preßkammern benutzt werden.

Eine besonders zweckmäßige Ausführungsform geht aus Anspruch 4 hervor. Die flexible Bahn ist in der Lage, im Zuführkanal den Raum zum Zwischenspeichern und Komprimieren des Ernteguts genau zu begrenzen, ohne das Schließen des Bindemittels am fertigen Rollballen zu behindern. Die sich dann in die Preßkammer hineinerstreckende Bahnschlaufe paßt sich sowohl den Gegebenheiten in der Preßkammer als auch dem Volumen des zwischenzuspeichernden Ernteguts problemlos an. Die Bahn schafft sozusagen einen geschlossenen Zwischenspeicher im Inneren der offenen Preßkammer, die ja während dieser Arbeitsphase zur Benutzung frei liegt.

Eine weitere, vorteilhafte Ausführungsform geht aus Anspruch 5 hervor. Mit der Halterung wird das freie Ende der Bahn quer durch den Zuführkanal bewegt, wenn dieser zum Schließen des Bindemittels abgesperrt werden muß. Die lösbare Festlegung des freien Endes in der Halterung ermöglicht es, nach dem Schließen der Klappe der Preßkammer das freie Ende und damit den Längsabschnitt der Bahn zurückzuziehen, um den normalen Wickelvorgang des Rollballens dann nicht mehr zu stören.

Im Hinblick auf eine wirksame Verdichtung des Ernteguts noch im Zuführkanal sind die Merkmale der Ausführungsform gemäß Anspruch 6 zweckmäßig. Die Preßwalze ist in der Lage, kontinuierlich eine sehr hohe Verdichtung im Erntegut zu erzeugen. Die Bahn hat dank ihrer Abstützung, entweder im Zuführkanal oder dann nach Schließen des Bindemittels auch am Umfang des fertigen Rollballens des Gegendruck zu erzeugen, der für die notwendige Verdichtung des Ernteguts gebraucht wird. Da sich das Erntegut beim Verdichten mit der Bahn in Richtung zum Einlaß bewegt, ist auch die Gefahr eines Staus im Zuführkanal ausgeschlossen, so daß nach dem Schließen der Preßkammer unverzögert mit unveränderter Förderleistung wieder mit dem Wickeln des neuen Rollballens begonnen wird. Die hohe Förderleistung durch den Zufuhrkanal und damit die hohe Arbeitsleistung der Vorrichtung resultieren auch aus der nahezu kontinuierlichen Wirkung der Preßwalze, die beim Zwischenspeichern komprimiert, aber während der restlichen Zeit kontinuierlich die Förderung beschleunigt.

Zweckmäßig ist ferner die Ausführungsform von Anspruch 7, da das Fangelement von der Halterung sehr leicht ergriffen und auch unter relativ hohen Kräften zuverlässig gehalten wird.

Baulich einfach ist auch die Ausführungsform von Anspruch 8, weil das Fangelement allein durch die Spannung der Bahn in den Halteklauen festgelegt bleibt, wenn der Reaktionsdruck aus der Verdichtung des Ernteguts zu wirken beginnt.

Damit die Abstützung der Bahn über die gesamte Breite des Zufuhrkanals gleich ist, ist die Ausführungsform von Anspruch 9 zweckmäßig.

Eine baulich einfache und zuverlässige Ausführungsform geht weiterhin aus Anspruch 10 hervor. Der Mechanismus mit der Schubgabel läßt sich auf engem Raum außerhalb der Preßkammer im stationären Teil der Vorrichtung unterbringen. Der Antrieb ist einfach; es sind nur wenige bewegliche Elemente notwendig. Wird die Schubgabel zurückgezogen, so löst sich das Fangelement selbsttätig aus den Halteklauen der Halterung, damit die Bahn zurückgezogen werden kann.

Für die Bahn sind besonders die Materialien gemäß Anspruch 11 zweckmäßig, weil sie verschleißarm und trotzdem widerstandsfähig sind. Die Bahn ist zweckmäßigerweise halbsteif und zugfest, so daß sie sich zwar biegen läßt, aber im wesentlichen keine Längsfalten bildet oder sich verwindet.

Günstig sind ferner die Merkmale von Anspruch 12, weil bei einer Wickelrichtung in der Preßkammer, die in etwa in Verlängerung des Zufuhrkanals zum unteren Rand der Öffnung der Klappe verläuft, die Preßelemente, die der zurückzuziehenden Bahn benachbart sind, an dieser unzweckmäßig reiben könnten. Die Abweisevorrichtung hält die Reibungsbelastungen von der Bahn fern oder reduziert sie auf ein vernachlässigbares Maß.

Eine weitere, zweckmäßige Ausführungsform, bei der die Bindemitteleintragvorrichtung mit einem Bindemittelspeicher im stationären Vorderteil gelagert ist und zum Eintragen und Anlegen des Bindemittels an den Rollballenumfang mit einem Preßelement in der Preßkammer zusammenarbeitet und eine zur Drehung antreibbare Förderwalze für das Bindemittel aufweist, geht aus Anspruch 13 hervor. Dies ist eine besonders einfache und wirkungsvolle Lösung des Antriebs für die Förderwalze. Sobald die Eintragvorrichtung in die Eintragstellung bewegt ist, wird das Preßelement in der Preßkammer zum Antrieb der Förderwalze benutzt, mit der das Bindemittel an den Umfang des Rollballens angelegt wird. Ist hingegen die Eintragvorrichtung wieder in die Rückzugstellung gebracht, so wird durch diese Bewegung genügend Platz für das Trennen oder eine Trennvorrichtung zum Abtrennen des Bindemittels geschaffen. Durch den Einzugswalzenspalt wird das Bindemittel über die gesamte Preßkammerbreite gleichmäßig an den Außenumfang des Rollballens angelegt, was im Hinblick auf ein einwandfreies Einbinden auch der Randbereiche des Rollballens wichtig ist.

Bei der Ausführungsform gemäß Anspruch 14 wird das auf einen Wickelkern aufgewickelte Bindemittel selbst als die Förderwalze benutzt, die zum Anlegen des Bindemittels an den Rollballen vom Preßelement angetrieben wird. Zu diesem Zweck wird dann das auf den Wickelkern gewickelte Bindemittel mit der Eintragvorrichtung so bewegt, daß das Preßelement in der Preßkammer das Bindemittel abwickelt und zwar wieder gleichmäßig über die gesamte Breite.

Baulich einfach ist die Ausführungsform von Anspruch 15, weil der Rahmen wenig Platz beansprucht, vewindungssteif ist und mit einem einfachen Antrieb zwischen den beiden Stellungen hin- und hergeschwenkt werden kann.

Wichtig ist ferner die Maßnahme von Anspruch 16, weil so zum Schließen des Bindemittels nur eine optimal kurze Zeitspanne, entsprechend der in Umfangsrichtung des Rollballens gesehenen Weite des Einlasses zuzüglich einer gewünschten Überlappung des Bindemittels, gebraucht wird.

Eine weitere, zweckmäßige Ausführungsform, bei der parallel zur Förderwalze eine Gegenwalze vorgesehen ist, geht aus Anspruch 17 hervor. Die Gegenwalze, die federnd gegen die Förderwalze angepreßt ist, bildet mit dieser einen weiteren Einzugswalzenspalt, die ein gleichmäßiges Einführen des Bindemittels über die gesamte Breite sicherstellt. Die Drehung der Gegenwalze wird, z.B. über die Förderwalze vom Preßelement in der Preßkammer abgeleitet.

Eine weitere, besonders wichtige Ausführungsform geht aus Anspruch 18 hervor. Hierbei gestaltet sich das trennen der Längsabschnitte des Bindemittels besonders einfach, wenn diese durch Sollbruchstellen oder schon von vornherein voneinander getrennt und nur mehr überlappend aufgewickelt sind. Es muß nur sichergestellt sein, daß die Sollbruchstelle bzw. die Überlappungselle stets erst hinter Förderwalze gelöst wird, damit das freie Ende des Bindemittels für den nächsten Eintragvorgang wieder bereitsteht. Die Bremsvorrichtung sorgt z.B. dafür, daß der vom Rollballen im Bindemittel wirkende Zug die Sollbruchstelle trennt oder die sich überlappenden Enden zweier aneinander anschließender Bindemittellängsabschnitte auseinanderzieht. Es entfällt eine gesonderte und genau zu steuernde Trennvorrichtung.

Alternativ dazu kann aber auch eine Ausführungsform gemäß Anspruch 19 zweckmäßig sein, bei der die Trennvorrichtung in üblicher Weise arbeitet und genügend Platz zum Arbeiten hat, weil die Eintragvorrichtung in der Rückzugstellung Platz freigibt.

Eine weitere, zweckmäßige Ausführungsform der Vorrichtung geht aus Anspruch 20 hervor. Anstelle der vorbeschriebenen Bahn wird hier ein Rechenglied benutzt, das die Zufuhr zur Preßkammer für die Dauer des Schließens des Bindemittels unterbricht und auch den Gegendruck beim Komprimieren des weiterhin aufgenommenen und durch die Preßwalze komprimierten Ernteguts aufbringt. Entweder durch den Kompressionsdruck gesteuert oder auf mechanischem Weg wird dann das Trennelement im wesentlichen parallel zu sich selbst durch den Einlaß in die Preßkammer bewegt, wobei es weiterhin das Erntegut so zwischenspeichert, daß dieses zwar den fertigen Rollballen ausschieben hilft, aber nicht durch die offene Klappe herausfallen kann. Erst nachdem die Klappe geschlossen ist, wird das Trennelement wieder in die Passivstellung bewegt und dann in der Längsführung zurückgefahren, so daß es für den nächsten Stauvorgang bereitsteht.

Alternativ dazu kann auch eine Ausführungsform zweckmäßig sein, wie sie aus Anspruch 21 hervorgeht. Hierbei ist das Rechenglied im Zufuhrkanal nur für das Zwischenspeichern beim Schließen des Bindemittels verantwortlich, während das andere Rechenglied in der Preßkammer solange wirkt, bis die Klappe geschlossen ist. Das Erntegut wird sozusagen von einem Rechenglied an das andere Rechenglied übergeben, dabei aber gehindert, das Einbinden, das Auswerfen des Rollballens oder das Schließen der Klappe zu stören.

Ein weiterer wichtiger Aspekt geht bei einer Vorrichtung mit einem durch Wände begrenzten Zuführkanal für Erntegut, in dem ein Förderorgan zur Drehung angetrieben ist, aus Anspruch 22 hervor. Für Erntegutwagen oder andere landwirtschaftliche Vorrichtungen ist ein kontinuierlicher und gleichmäßig verdichteter Erntegutstrang erforderlich, der mit herkömmlichen Förderorganen nicht in zufriedenstellender Weise erzeugbar ist. Das gilt auch für Rollballenpressen, bei denen die Arbeitsleistung von einer möglichst gleichmäßigen und wirkungsvollen Aufnahme des Ernteguts abhängt. Mit der Ausbildung gemäß Anspruch 22 wird eine hohe Förderleistung und eine über die gesamte Förderbreite weitgehend gleichmäßige Verdichtung des Erntegutstrangs erreicht. Die Preßflächen wirken schonend und nicht schneidend auf das Erntegut ein. Durch das pfeilförmige Muster wird der in der Regel in der Mitte voluminösere Erntegutstrang gleichmäßig zu beiden Seiten verdichtet, so daß er im Zuführkanal gleichförmig vorwärtsgefördert wird. Ein ähnliches Prinzip ist zwar von Messerwellen bekannt, die auf das zu bearbeitende Gut neben der primären Schneidwirkung auch eine geringere Förderwirkung ausüben; die dort vorgesehenen Schneidkanten sind jedoch nicht mit den Preßflächen zum Erzielen einer Vergleichmäßigung in der Verdichtung und der Förderung vergleichbar. Solche Preßwalzen können zweckmäßig sowohl für Rollballenpressen als auch für andere landwirtschaftliche Vorrichtungen eingesetzt werden, bei denen es auf eine zügige Erntegutförderung mit schonender Behandlung des Erntegutes und einer gleichmäßigen Verdichtung über die Strangbreite ankommt.

Wichtig ist dabei auch die Ausführungsform gemäß Anspruch 23, weil durch mehrere Preßflügelscharen die Förder- und Verdichtungswirkung individuell einstellbar ist.

Wichtig sind ferner die Maßnahmen von Anspruch 24, weil die Preßflügel anhaftendes Erntegut dann wirkungsvoll abstreifen.

Besonders wichtig ist dabei die Ausführungsform von Anspruch 25, weil durch diese geometrische Ausbildung ein wirkungsvolles und für das Erntegut schonendes Abstreifen gewährleistet ist.

Zweckmäßig ist ferner die Ausführungsform von Anspruch 26, weil bei dieser Anordnung der Preßwalze eine besonders wirkungsvolle Verdichtung und Förderung des Ernteguts erreicht werden, vor allem auch weil die Preßflächen das Erntegut nicht zum gegenüberliegenden Boden des Zuführkanals hinpressen, sondern vorwiegend in Vorwärtsrichtung beaufschlagen.

Zweckmäßig ist ferner die Ausführungsform von Anspruch 27, weil mit der nachgiebigen Lagerung der Preßwalze eine individuelle Einstellung der Verdichtungswirkung einerseits erzielt werden kann und andererseits, insbesondere bei einer Rollballenpresse der vorstehenden Art, mit zunehmender Verdichtung des Ernteguts beim Zwischenspeichern im ersten Schritt die Preßwalze selbst mehr Platz zum Zwischenspeichern des Ernteguts freimacht, wenn die Verdichtung einen bestimmten Wert erreicht hat.

Anhand der Zeichnung werden das erfindungsgemäße Verfahren und die zum Durchführen des Verfahrens geeignete Vorrichtung erläutert. Es zeigen:

Fig. 1 eine Vorrichtung zum Bearbeiten von Erntegut, insbesondere eine Rundballenpresse, in betriebsbereiter Stellung, in einem schematischen Längsschnitt,

Fig. 2 die Rundballenpresse von Fig. 1 in einer Arbeitsphase vor Fertigstellen eines Rundballens,

Fig. 3 die Rundballenpresse in einer Arbeitsphase beim Fertigstellen eines Rundballens,

Fig. 4 die Rundballenpresse beim Auswerfen des fertigen Rollballens,

Fig. 5 die Rundballenpresse unmittelbar vor Beginn des Wickelns eines neuen Rollballens,

Fig. 6 ein Detail in einem Querschnitt,

Fig. 7 eine um 90° dazu gedrehte Ansicht des Details,

Fig. 8 eine geänderte Ausführungsform einer Rollballenpresse,

Fig. 9 eine weitere Ausführungsform einer Rollballenpresse,

Fig. 10 ein Detail der Rollballenpresse von Fig. 1,

Fig. 11 ein weiteres Detail der Rollballenpresse von Fig. 1, und

Fig. 12 ein weiteres Detail der Rollballenpresse von Fig. 1.

Eine Vorrichtung zum Bearbeiten von Erntegut, insbesondere zum Wickeln und Einbinden eines Erntegut-Rollbal- lens, d.h. eine Rollballenpresse 1 für kontinuierlichen Betrieb, weist einen fahrbaren, stationären Vorderteil 2 und einen eine Preßkammer 4 enthaltenen Hinterteil 3 auf. Im Vorderteil 2 ist unterseitig ein sich bis in die Preßkammer 4 erstreckender Zuführkanal 5 vorgesehen, an dessen äußeren Ende ein erstes Förderorgan 6 in Form einer Pick-up-Trommel mit gesteuerten Zinken angeordnet ist. Im weiteren Verlauf des Zuführkanals ist vor einem Einlaß 8 zur Preßkammer 4 ein zweites Förderorgan ein Form einer Preßwalze 7 zur Drehung antreibbar angebracht, die in den Zuführkanal 5 eingreift.

Die Preßkammer 4, die bei dieser Ausführungsform eine Preßkammer mit fester Größe ist, aber auch eine Preßkammer mit variabler Größe sein könnte, wird durch nichtgezeigte Seitenwände und in Umfangsrichtung verteilte Preßelemente 9 begrenzt, die aus angetriebenen Rollen 10 und diese umschlingenden Riemen 11 bestehen, die eine annähernd zylindrische Innenkontur der Preßkammer 4 ergeben. Die Riemen 11 sind entweder, z.B. nebeneinanderliegende Riemen oder ein über die gesamte Breite durchgehendes Band.

An der dem Zuführkanal 5 abgewandten Seite der Preßkammer 4 ist im Hinterteil 3 eine Klappe 12 oben angelenkt, die nach hinten oben geöffnet werden kann. Denkbar ist es allerdings auch, die Klappe 12 unten anzulenken und aus einzelnen Gliedern aufzubauen, die beim Auswerfen gestreckt werden und eine Ablaufbahn für den Rollballen bilden. Ferner könnte die Klappe 12 auch zweiflügelig sein.

Am Vorderteil 2 ist eine Zugdeichsel 13 angebracht, mit der die Rollballenpresse 1 an einen Schlepper angehängt wird. Im Vorderteil 2 ist oberhalb des Zuführkanals 5 ein Hebelmechanismus 14 vorgesehen, der von Zylindern 16 verschwenkbare Winkelhebel 15 aufweist, an denen eine Schubgabel 17 in Richtung eines Pfeiles 18 nach unten bewegbar angelenkt ist, die am unteren Ende eine Halterung H bildet, die von oben nach unten quer durch den Zuführkanal 5 bewegbar ist. Zwischen der Schubgabel 17 und der Preßwalze 7 ist ein Speicher 19 für eine Bahn 20 angeordnet, deren freies Ende mit 21' bezeichnet ist. Die Bahn 20 kann mit einem Antrieb abgewickelt werden oder auch nur gegen die Kraft einer Rückzugsfeder. Der Antrieb des Speichers 19 kann ein Hydromotor sein, der umsteuerbar ist und dessen Drehmoment variabel ist.

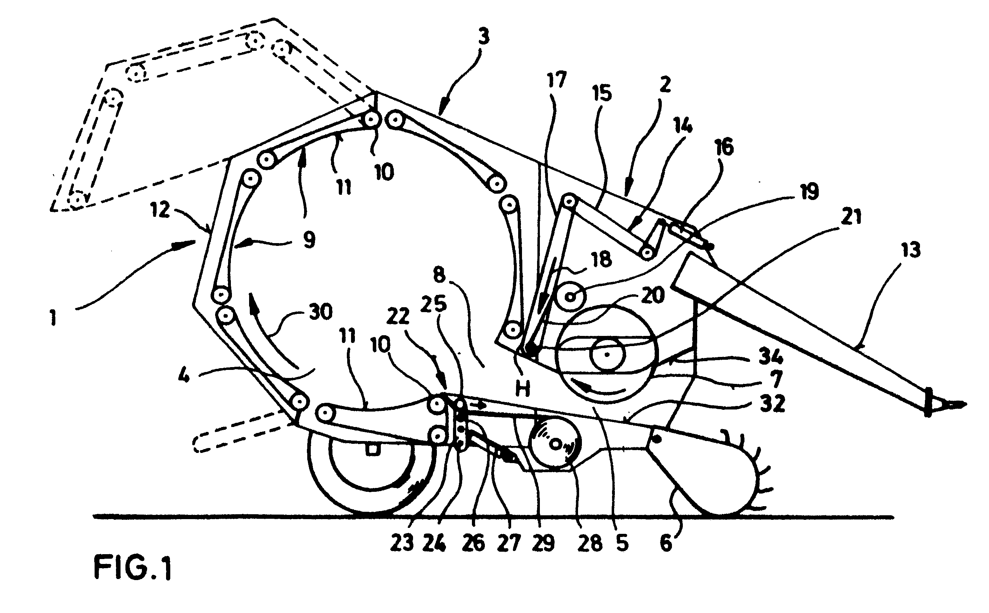

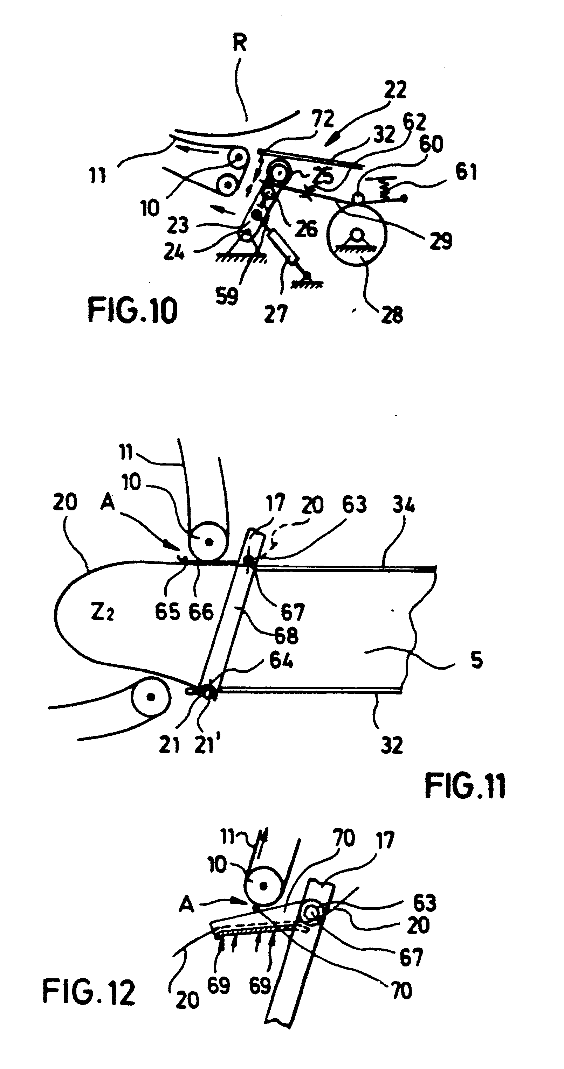

Der Zuführkanal 5 weist einen in etwa ebenen, leicht ansteigenden Boden 32 sowie eine im Bereich der Preßwalze 7 heruntergezogene Deckwand 34 auf. Unterhalb der Bodenwand 32 ist eine Bindemittel-Eintragvorrichtung 22 in der Nachbarschaft der ersten Rolle 10 in der Preßkammer 4 angeordnet. Die Bindemittel-Eintragvorrichtung, die im Detail aus Fig. 10 erkennbar ist, besitzt einen Rahmen 23, der um ein gehäusefestes Schwenklager 24 mittels eines Zylinders 27 zwischen einer Rückzugsstellung (Fig. 10) und einer Eintragsstellung (Fig. 1) hin- und herbewegbar ist. Im Rahmen 23 sind eine obenliegende Förderwalze 25 sowie eine darunterliegende, zu ihr parallele und durch Federn 59 dagegengepreßte Gegenwalze 26 drehbar gelagert. Der Zylinder 27 ist stationär abgestützt. In der Eintragsstellung wird die Förderwalze 25 gegen die Rolle 10 bzw. die um sie laufenden Riemen 11 des ersten Preßelmentes 9 in der Preßkammer angedrückt, so daß diese als Antriebselemente für die Förderwalze 25 fungieren. Ferner ist unterhalb der Bodenwand 32 des Zuführkanals ein Speicher 28 oder eine Bindemittel-Rolle drehbar gelagert, auf der ein Bindemittel 29 bevorratet ist, das mittels der Eintragvorrichtung 22 in die Preßkammer 4 eingeführt wird.

Das Bindemittel 29 kann ein Kunststoffnetz sein, das in endloser Form vorliegt und (Fig. 10) in der jeweils benötigten Länge mittels einer Trennvorrichtung 72 abgetrennt wird, die in der Rückzugsstellung der Eintragvorrichtung 22 betätigt wird. Denkbar wäre es auch, als Bindemittel eine Folie zu verwenden oder ein anderes, bahnartiges Material. Ist das Bindemittel 29 ein Kunststoffnetz, dann können die Ränder des Netzes wie bei einem Haarnetz mit elastischen Einlagen besetzt sein, damit das den Rollballen umgebende Bindemittel auch die Seitenränder abdeckt. Ferner könnte das Bindemittel (Fig. 10) mit vorbestimmte Längsabschnitte begrenzenden Sollbruchstellen 62 ausgestaltet sein, an denen das Bindemittel jeweils abgetrennt wird. Ferner ist es möglich, die Bindemittellängsabschnitte schon vorher abzutrennen und mit Überlappungen aufzuwickeln, so daß beim Abwickeln jeweils ein Längsabschnitt nach dem anderen abgezogen wird.

Bei der Ausführungsform der Eintragvorrichtung gemäß Fig. 10 können die Walzen 25, 26 dank der Feder 59 als Klemmvorrichtung dienen, die das Bindemittel 29 so bremst, daß der Zug des Rollballens R im Walzenspalt mit der Rolle 10 ausreicht, die Sollbruchstelle 62 zu lösen, sobald das Bindemittel 29 am Rollballen R überlappt ist. Denkbar wäre es auch, den Speicher 28 von Fig. 10 anstelle der Förderwalze 25 im Rahmen 23 zu lagern und mit dem Zylinder 27 an die Rolle 10 anzudrücken, um das Bindemittel abzuwickeln. Am Speichere 28 kann eine Bremsrolle 60, z.B. belastet durch eine Feder 61 oder einen taktweise betätigbaren Zylinder, angreifen, um u.a. den Speicher 28 am Nachlaufen zu hindern. Das Bindemittel 29 muß nicht notwendigerweise aufgewickelt sein. Es könnte auch in zick-zack- förmig gefalteten und ineinandergesteckten Abschnitten in einer Kassette bereitgehalten werden, aus der jeweils ein Längsabschnitt den Anfang des nächstfolgenden herauszieht, so daß beim nächsten Einbinden eines Rollballens der nächste Längsabschnitt ergriffen wird.

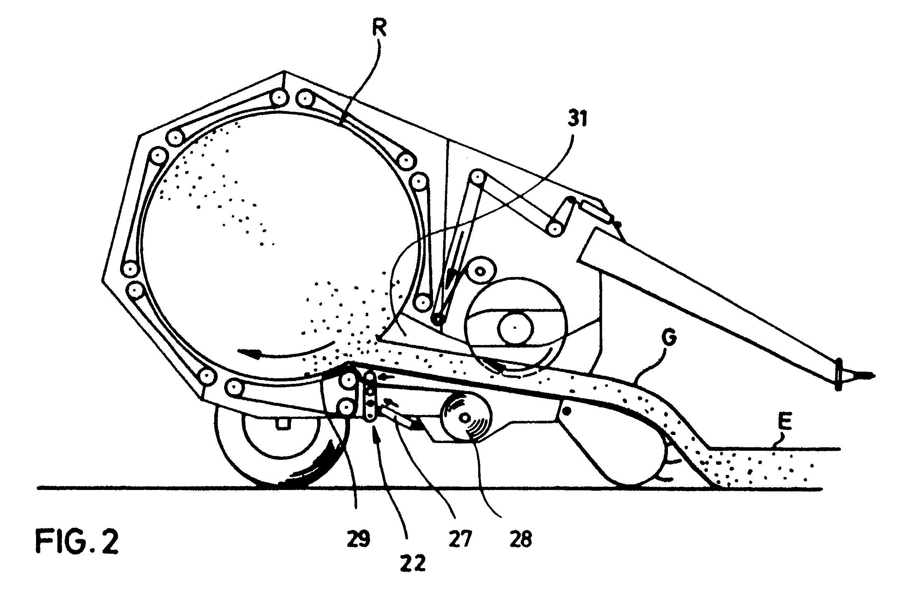

Das Arbeiten der Rollballenpresse 1 gemäß Fig. 1 soll nun anhand der Fig. 2 bis 5 erläutert werden.

Ausgehend von Fig. 1 beginnt bei noch leerer Preßkammer 4 das erste Förderorgan 6, das auf dem Boden liegende Erntegut E (Fig. 2) aufzunehmen und durch den Zuführkanal 5 und den Einlaß 8 in die Preßkammer 4 zu fördern. Die Preßwalze 7 arbeitet dabei als zweites Förderorgan, das zur zügigen Zufuhr und Ausbildung eines Erntegutstranges G gemäß Fig. 2 beiträgt. Das Erntegut wird in der Preßkammer zunächst aufgehäuft und dann mit den angetriebenen Preßelementen 9 allmählich in eine rollende Bewegung versetzt, wobei der Erntegutstrang G spiralförmig aufgewickelt und dabei allmählich verdichtet wird.

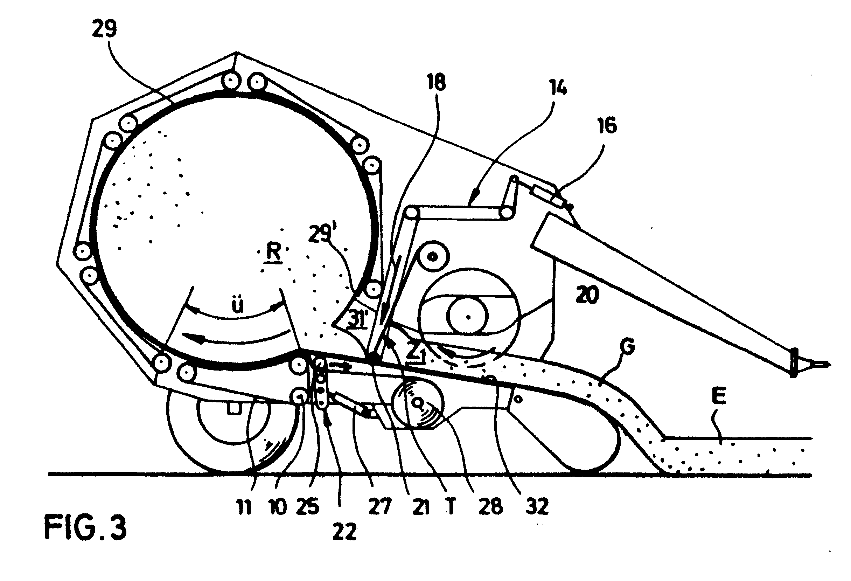

In Fig. 2 ist ein Rollballen R kurz vor seiner Fertigstellung dargestellt, was durch nichtgezeigte Fühlorgane festgestellt wird, die einen zunehmenden Druck am Schließmechanismus der Klappe 12 melden. Daraufhin wird bei weiterhin der Preßkammer 4 zugeführtem Erntegut die Eintragvorrichtung 22 (durch den Zylinder 27) in die Eintragsstellung bewegt (durch den Zylinder 27), so daß das Bindemittel 29 bei Anlage der Förderwalze 25 an der Rolle 10 zwischen der Förderwalze 25 und der Gegenwalze 26 vorgezogen und durch den Walzenspalt zwischen der Förderwalze 25 und der Rolle 10 in einen weiteren Walzenspalt zwischen dem Umfang des Rollballens R und der Rolle 10 des Preßelementes 9 hineingezogen wird. Der in der Preßkammer 4 rotierende Rollballen R nimmt über die Preßelemente 9 das Bindemittel 29 mit, bis in der Stellung von Fig. 3 das freie Ende 29' des Bindemittels 29 kurz oberhalb des Einlasses 8 angelangt ist. Die Eintragvorrichtung wird dann wieder zurückgeschwenkt. Die Wickelrichtung 30 ist (Fig. 1) im Uhrzeigersinn. Kurz bevor das freie Ende 29 in den Einlaß 8 gelangt, werden die Zylinder 16 betätigt, so daß die Schubgabel 17 in Richtung eines Pfeiles 18 nach unten fährt und das freie Ende 21 der Bahn 20 quer durch den Zuführkanal 5 bis zur Bodenwand 32 bewegt. Der Erntegutstrang G wird abgetrennt, wobei in Förderrichtung hinter dem als Trennelement T den Zuführkanal absperrenden Längsabschnitt der Bahn 20 ein Freiraum 31' entsteht, der sich durch Einziehen des letzten Teils des Erntegutstranges G unter das Bindemittel 29 zusehends vergrößert. Die Preßwalze 7 fördert genau wie auch das erste Förderorgan weiterhin den Erntegutstrang in den Zuführkanal 5. Die Preßwalze 7 verdichtet den Erntegutstrang in zunehmendem Maß, so daß ein Zwischenspeicher Z1 im Zuführkanal 5 entsteht. Das freie Ende 29' des Bindemittels 29 kann sich während dieser Zeitspanne quer über den Einlaß 8 hinwegbewegen und läuft in einen Überlappungsbereich Ü ein. Dabei verdichtet die Preßwalze 7 das Erntegut weiter, wobei die unter Spannung gehaltene Bahn 20 zunächst ausgebeult wird, bis sie sich schließlich am Umfang des Rollballens R abstützt und dabei eine allmählich wachsende Bahnschlaufe bildet. Die Rückhaltekraft in der Bahn 20 kann aber auch so stark sein, daß die Bahn nur so weit nachgezogen wird, daß sie nicht gegen den Außenumfang des noch rotierenden Rollballens R gedrückt wird.

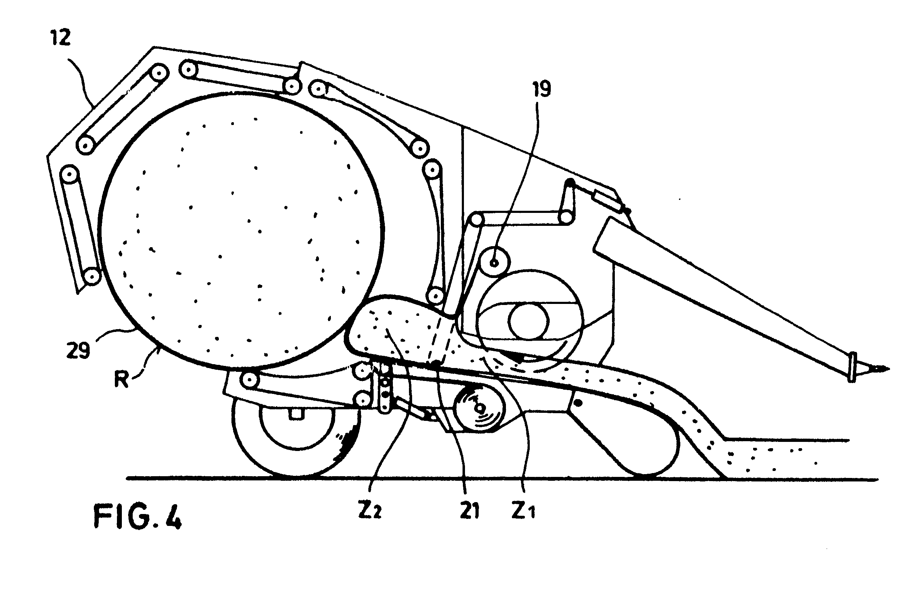

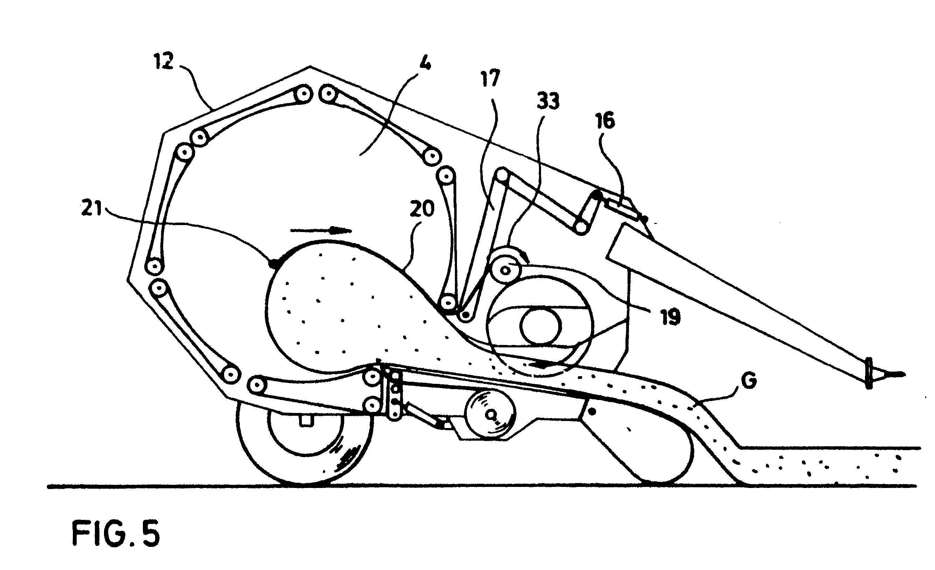

Sobald das Bindemittel 29 den Überlappungsbereich Ü gebildet hat, wird es abgetrennt. Dann wird die Klappe 12 geöffnet und der fertige und eingebundene Rollballen R ausgeworfen. Dabei dringt die Schlaufe der Bahn 20 (Fig. 4) in die Preßkammer ein; sie übt einen Auswerfimpuls auf den Rollballen R aus und bildet einen anwachsenden Zwischenspeicher Z2 innerhalb der Preßkammer 4. Sobald die Klappe 12 geöffnet ist, fällt der Rollballen R hinaus. Danach wird die Klappe (Fig. 5) geschlossen. Bis zum endgültigen Schließen der Klappe wird das freie Ende 21 der Bahn 20 in der in Fig. 4 gezeigten Stellung festgehalten, so daß eine wachsende Bahnschlaufe entsteht, aus der das Erntegut nicht durch die Klappenöffnung fällt.

Nachdem die Klappe 12 vollständig geschlossen ist (Fig. 5), wird das freie Ende 21 der Bahn 20 durch Zurückziehen der Schubgabel 17 mittels des Zylinders 16 freigegeben. Die Bahn 20 wird durch den nichtdargestellten Antrieb in den Speicher 19 zurückgezogen und aufgewickelt (Pfeil 33) und gibt das vorverdichtete Erntegut frei, so daß die Preßelemente 9 erneut mit dem Aufbau eines Rollballens beginnen können. Die Bahn 20 wird aufgewickelt, bis ihr freies Ende 21 wieder in der in Fig. 1 gezeigten Stellung in der Halterung H festliegt. Ein neuer Rollballen R wird gebildet, bis wieder die Phase gemäß Fig. 2 erreicht wird, ehe neuerlich die vorbeschriebenen Vorgänge ablaufen.

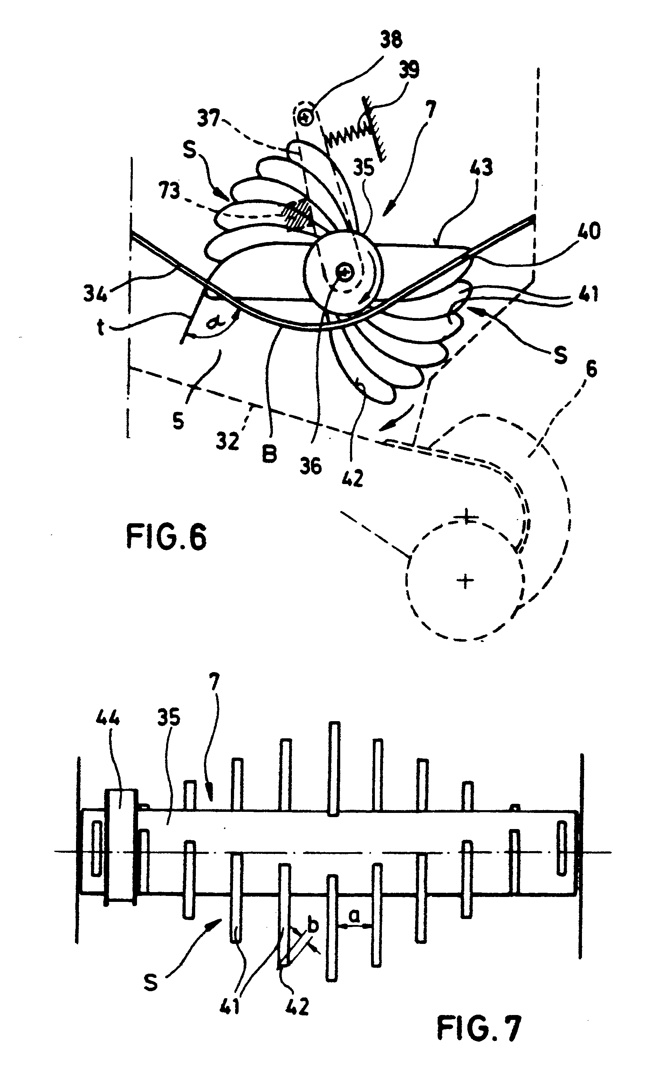

Aus den Fig. 6 und 7 ist der Aufbau der Preßwalze 7 im Zuführkanal 5 erkennbar. Es ist dabei hervorzuheben, daß die Preßwalze 7 auch für andere landwirtschaftliche Vorrichtungen verwendbar ist, bei denen es auf eine Verdichtung und eine gleichmäßige Förderung von Erntegut ankommt. Die Deckwand 34 des Zuführkanals 5 ist mit einem nach unten verlaufenden Bogen B ausgebildet und weist eine Vielzahl zueinander paralleler Längsschlitze 40 auf, die zum Durchtritt von an einem Walzengrundkörper 35 der Preßwalze 7 befestigten Preßflügeln 41 bestimmt sind. Der Walzengrundkörper 35, dessen Achse 36 parallel zu Deckwand 34' und quer zum Zuführkanal 5 verläuft, kann in Lenkern 37 schwenkbar gelagert sein, die durch Federn 39 auf eine durch einen Anschlag 73 definierte Grundstellung vorgespannt sind. Anstelle der Feder 39 kann auch ein einstellbarer Arbeitszylinder verwendet sein.

Auf dem Walzengrundkörper 35 (siehe auch Fig. 7) sind zwei in Umfangsrichtung versetzte Scharen S und S1 von Preßflügeln 41 angeordnet, die in Drehrichtung vorneliegende Preßflächen 42 mit einer bestimmten Breite b aufweisen. Zwischen den Preßflügeln 41 sind vorbestimmte Querabstände a vorgesehen. Die Preßflügel 41 sind dabei in jeder Schar S, S1 so auf dem Walzengrundkörper 35 angeordnet, daß ihre Preßflächen 42 in einer Abwicklung des Umfangs des Walzengrundkörpers 35 ein pfeilförmiges Muster mit in Drehrichtung weisender Pfeilspitze ergeben. Dadurch wird eine sehr gleichmäßige Förder- und Preßwirkung auf das Erntegut ausgeübt, wobei durch das Pfeilmuster der üblicherweise in der Mitte am dichtesten vorliegende Erntegutstrang zur Seite vergleichmäßigt und über seine Breite gleichmäßig verdichtet wird. In Fig. 7 ist ein am Walzengrundkörper 35 angebrachtes Antriebsrad 44 gezeigt.

Jede Preßfläche 42 verläuft mit einer konvexen Krümmung. Zusätzlich ist die Achse 36 des Walzengrundkörpers 35 zur in Förderrichtung vorderen Seite des Bogens B verlagert. Damit wird erreicht, daß im Durchtrittsbereich jeder Preßfläche 42 beim Herausziehen eines Preßflügels 41 aus dem Zuführkanal eine Tangente t im Durchtrittspunkt an die Preßfläche 42 mit der Deckwand 34 einen Winkel einschließt, der kleiner ist als 90°, so daß ein wirkungsvolles Abstreifen des Ernteguts in den Schlitzen 40 erreicht wird, ohne das Erntegut zu zerschneiden oder zu zerquetschen. Die Preßwalze 7 kann durch einen im Drehmoment einstellbaren Hydraulikmotor angetrieben werden, z.B. über einen Kettentrieb. In der Arbeitsphase zwischen den Fig. 3 und 4, d.h. sobald im ersten Zwischenspeicher Z1 das Erntegut stark verdichtet und das Trennelement T bis nahe an den Umfang oder an den Umfang des Rollballens bewegt worden ist, kann die preßwalze 7 gegen die Kraft der Feder 39 in Fig. 6 entgegen dem Uhrzeigersinn nachgeben, um die Preßwirkung etwas zu verändern und auch um mehr Platz für Erntegut freizumachen. Die Rückseiten der Preßflügel 41 sind mit 43 bezeichnet und verlaufen bei dieser Ausführungsform im wesentlichen gerade. Die Preßflügel 41 könnten aber auch von Stäben gebildet werden, deren Vorderseiten die Preßflächen 42 bilden.

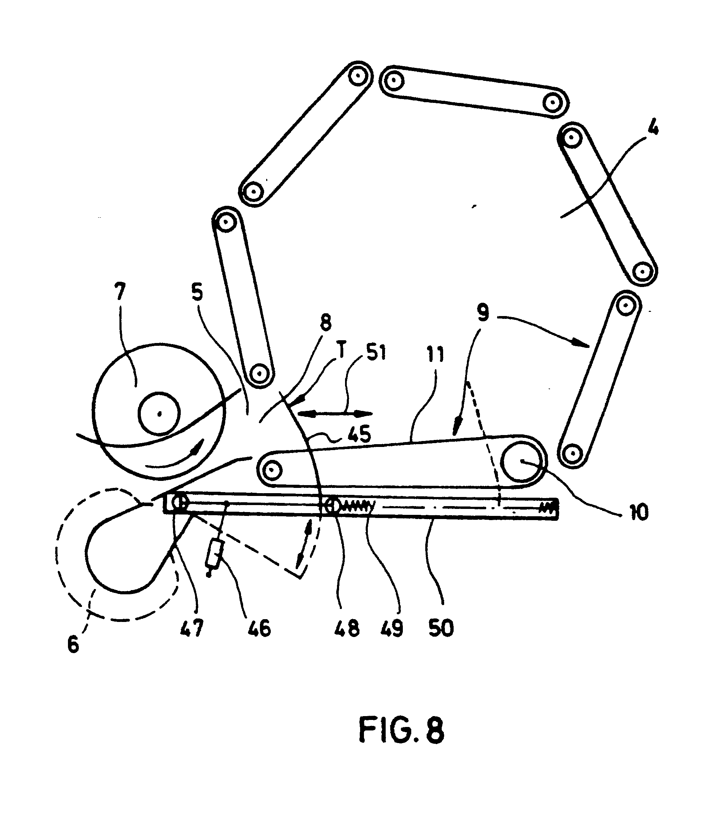

Bei einer geänderten Ausführungsform einer Rollballenpresse gemäß Fig. 8 ist anstelle des Bandes 20 als Trennelement T ein starres Rechenglied 45 vorgesehen, das durch einen Zylinder 46 aus einer unterhalb des Bandes 11 des Preßelementes 9 liegenden Passivstellung in die in Fig. 8 gezeigte Staustellung hochschwenkbar ist. Das Rechenglied 45 ist in einer Schwenklagerung 47 eines Wagens 48 schwenkbar abgestützt. Der Wagen 48 kann gegen die Kraft einer Feder 49 in einer Längsführung unterhalb des Preßelementes 9 verfahren, bis das Rechenglied 45 in die in strichlierte Linien angedeutete Position gelangt ist. Es ist in Richtung eines Doppelpfeiles 51 hin- und herfahrbar.

Die Funktion des Trennelementes T ist die gleiche, wie anhand der vorhergehenden Figuren erläutert. Bis zum Schließen des Bindemittels wird das Erntegut durch die Preßwalze 7 verdichtet und am Trennelement T abgefangen. Sobald das Bindemittel geschlossen ist und mit dem Auswerfen des Rollballens begonnen wird, verfährt das Trennelement T in Richtung zur Öffnung der Klappe 12 hin und hindert dabei das nachdrängende Erntegut am Herausfallen. Sobald die Klappe 12 wieder geschlossen ist, wird das Rechenglied 45 durch den Zylinder 46 nach unten verfahren, ehe der Wagen 48, z.B. durch die Feder 49, zurückverfahren wird.

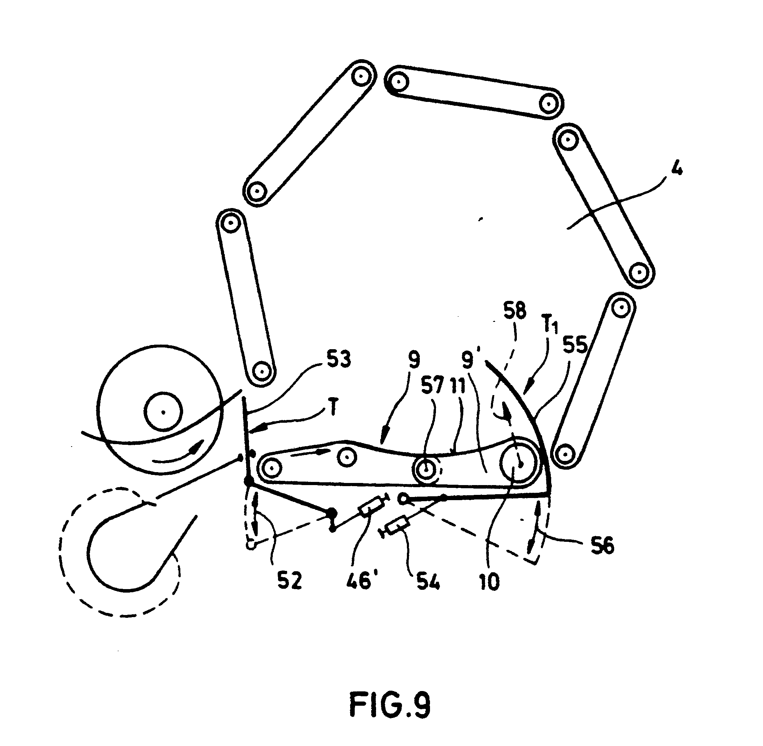

Bei der Ausführungsform der Fig. 9 sind ein erstes und ein zweites Trennelement T und T1, jeweils in Form eines Rechengliedes 53 bzw. 55 vorgesehen. Das Rechenglied 53 ist in Richtung eines Doppelpfeiles 52 zwischen einer Passivstellung unterhalb des Bodens des Zuführkanals und einer Staustellung quer durch den Zuführkanal 5 durch einen Zylinder 46' hin- und herbewegbar.

Das erste, in der Preßkammer 4 liegende Preßelement 9 ist verhältnismäßig lange ausgebildet und mit mehreren Umlenkwalzen 10 ausgestattet. Das zweite Trennelement T1 bzw. das Rechenglied 55 ist mittels eines Zylinders 54 in Richtung eines Doppelpfeiles 56 hin- und herschwenkbar, um in der hochgeschwenkten Stellung (Fig. 9) das Herausfallen des Erntegutes aus der noch offenen Klappe zu verhindern und das Erntegut im zweiten Zwischenspeicher aufzubewahren.

In Fig. 9 ist ferner als Variante angedeutet, den in Wickelrichtung hinteren Teil des ersten Preßelementes 9 die Funktion des zweiten Trennelementes T1 übernehmen zu lassen. Und zwar ist das Preßelement 9 um eine Gelenkachse 57 mit seinem hinteren Ende bzw. der dort angeordneten Umlenkrolle 10 hochschwenkbar (Pfeil 58), um das nach Absenken des Rechengliedes 53 in die Preßkammer 4 hineingeförderte Erntegut aufzufangen und am Herausfallen aus der Klappenöffnung zu hindern.

Fig. 11 zeigt im Detail die Arbeitsphase der Rollballenpresse gemäß Fig. 4 in einem Teilschnitt. Die Schubgabel 17 ist abgesenkt, so daß sie annähernd parallel zu den Seitenwänden des Zuführkanals 5 quer durch diesen greift und das freie Ende 21 der Bahn 20 mittels des Fangelementes 21' an oder in der Bodenwand 32 festhält. Dazu ist an den Enden der Gabelzinken 68 jeweils eine nach unten offene Halteklaue 64 angeformt, die das in Form eines über die Breite der Bahn 20 durchgehenden Stabes ausgebildete Fangelement 21' festhält. Die Bahn 20 und das Fangelement 21' sind annähernd so breit wie der Zuführkanal 5.

Ferner besitzt die Schubgabel 17 einen Querholm 63, der auf der Höhe der Deckwand 34 des Zuführkanals 5 steht und zum Umlenken der Bahn 20 dient. Anstelle des Querholms 63 könnte auch ein quer verlaufendes Widerlager (Umlenkrolle) starr im Ende des Zuführkanals 5 vorgesehen sein.

Ferner ist im in Wickelrichtung 30 vorderen Teil des Einlasses 8 des Zuführkanals 5 eine Abweiseeinrichtung A vorgesehen, die die Reibungsbelastungen des Bandes bzw. der Riemen 11 oder der Rolle 10 von der Bahn 20 fernhält.

Bei der Ausführungsform gemäß Fig. 11 besteht die Abweisevorrichtung aus einer, z.B. um eine Achse 67 an der Schubgabel 17 schwenkbaren Klappe 66, für die in der Preßkammer, z.B. an den Seitenwänden, Anschläge 65 vorgesehen sind. Die Klappe 66 wird unter dem Druck des Erntegutes in der Schlaufe der Bahn 20 gegen die Anschläge 65 gepreßt und bildet ein Gleitlager für die Bahn 20. Wird die Schubgabel 17 zurückgezogen, dann wird auch die Klappe 66 aus diesem Bereich herausbewegt. Die Anschläge 65 können auch weggelassen werden, so daß die Klappe 66 unmittelbar an den Riemen 11 anliegt. Die Reibung zwischen den Riemen 11 und der Klappe 66 ist geringer, als die der Riemen 11 an der Bahn 20, die z.B. aus PVC besteht und an der Klappe 66 nicht gleitet.

Fig. 12 zeigt eine andere Ausführungsform der Abweisevorrichtung A, wobei, z.B., an der Schubgabel 17 um die Achse 67 eine Klappe 69 schwenkbar ist, die durch seitliche Wangen 70 ausgesteift ist und an Anschläge 71 anlegbar ist. Allerdings greift die Klappe 69 unter die Bahn 20, so daß die Bahn auf der Klappe 69 abgestützt gleiten kann und in diesem Bereich nicht dem Druck des Ernteguts im zweiten Zwischenspeicher Z2 ausgesetzt wird. Die Abweisevorrichtung ist dabei so auszubilden, daß beim Zurückziehen der Bahn 20 (siehe Fig. 5) das freie Ende 21 mit dem Fangelement 21' zuverlässig in den Halteklauen 64 der Schubgabel 17 angelangt, wenn diese vollständig nach oben gezogen ist. Die Trennung zwischen der Bahn 20 und dem Band bzw. den Riemen 11 könnte auch durch eine in der Preßkammer fest angeordnete, quer verlaufende Platte bewerkstelligt werden, unter oder über der die Bahn läuft, so daß sie nicht unmittelbar das Preßelement berührt, das sich beim Zurückziehen der Bahn in der entgegengesetzten Richtung bewegt, oder daß die Bahn 20 nicht mit hohem Druck an den Riemen 11 reibt.

**Patentansprüche**

1. Verfahren zum Herstellen von eingebundenen Erntegut-Rollballen in der Preßkammer einer kontinuierlich mit einem Erntegutstrang beschickten, fahrbaren Vorrichtung, insbesondere einer Rollballenpresse, wobei der Erntegutstrang durch einen Zuführkanal in die Preßkammer eingeführt und darin spiralförmig zu dem Rollballen gewickelt wird, der darauffolgend in ein Bindemittel eingebunden und danach ausgeworfen wird, und wobei der kontinuierlich zugeführte Erntegutstrang zumindest während des Schließens des Bindemittels um den Umfang des fertigen Rollballens durch Schließen des Einlasses zur Preßkammer vom fertigen Rollballen abgetrennt und das Erntegut unter Komprimieren zwischengespeichert wird, **dadurch gekennzeichnet,** daß in zwei aneinander anschließenden Schritten derart zwischengespeichert wird, daß nach dem Schließen des Bindemittels am Ende des ersten Schrittes der Einlaß wieder geöffnet und in einem zweiten Schritt bei zumindest noch teilweise in der Preßkammer befindlichem, fertigem Rollballen bis zum Schließen der Preßkammer von Rollballen getrennt in der Preßkammer zwischengespeichert wird.

2. Verfahren nach Anspruch 1, **dadurch gekenn-** **zeichnet,** daß das Erntegut im zweiten Schritt unter Komprimieren zwischengespeichert wird.

3. Vorrichtung zum Bearbeiten von Erntegut, insbesondere Rollballenpresse, mit einem Erntegut-Zuführkanal (5) zu einer Wickel- und Preßkammer (4), deren Innenumfang durch Seitenwände und durch in Wickelrichtung angetriebene Preßelemente begrenzt ist, mit einer zwischen einer Schließ- und einer Offenstellung hin- und herbewegbaren Auswurfklappe (12) der Preßkammer (4), mit einem ersten Förderorgan am Anfang des Zuführkanals (5), mit einem zweiten Förderorgan im Verlauf des Zuführkanals zwischen dem ersten Förderorgan und einem Einlaß (8) zur Preßkammer (4), mit einer in Wickelrichtung hinter dem Einlaß (8) angeordneten Bindemittel-Eintragvorrichtung (22), und mit einer zwischen dem zweiten Förderorgan und dem Einlaß (8) aus einer Passivstellung außerhalb des Zuführkanals (5) in eine Staustellung quer durch den Zuführkanal (5) bewegbaren Trennelement (T), **dadurch gekennzeichnet,** daß das zweite Förderorgan eine mit Preßflügeln (41) bestückte, kontinuierlich angetriebene Preßwalze (7) ist, und daß das Trennelement (T) davon getrennt und in der Staustellung mit dem Erntegut (G) durch den Einlaß (8) in die Preßkammer (4) bewegbar ist.

4. Vorrichtung nach Anspruch 3, **dadurch gekennzeichnet,** daß das Trennelement (T) eine flexible, nachziehbar gehaltene Bahn (20) ist, von der in der Staustellung ein Längsabschnitt zwischen sich gegenüberliegenden Wänden (32, 34) des Zuführkanals (5) abgestützt ist, und daß die Länge des Längsabschnittes durch Nachziehen der Bahn (20) bei festgelegtem freien Ende (21) bis zur Bildung einer in die Preßkammer (4) reichenden Bahnschlaufe vergrößerbar ist.

5. Vorrichtung nach den Ansprüchen 3 und 4, **dadurch gekennzeichnet,** daß die Bahn (20) - in Wickelrichtung (30) - vor dem Einlaß (8) des Zuführkanals (5) zur Preßkammer (4) gespeichert, vorzugsweise aufgewickelt ist, daß das freie Ende (21) der Bahn (20) in einer Halterung (H) lösbar festgelegt ist, und daß die Halterung (H) an einem Mechanismus (14) angebracht und mit diesem sowie dem freien Ende (21) aus einer Stellung bei einer Wand (34) des Zuführkanals bis zur gegenüberliegenden Wand (32) des Zuführkanals (5) ausfahrbar ist.

6. Vorrichtung nach einem der Ansprüche 3 bis 5, **dadurch gekennzeichnet,** daß der den Zuführkanal (5) sperrende Längsabschnitt der Bahn (20) zwischen Stützstellen im Zuführkanal durch Spannen der Bahn (20) oder durch Anlage am Außenumfang des Rollballens (R) in der Preßkammer (4) abstützbar ist.

7. Vorrichtung nach einem der Ansprüche 3 bis 6, **dadurch gekennzeichnet,** daß im freien Ende (21) der Bahn (20) ein starres Fangelement (21') festgelegt ist, und daß die Halterung (H), vorzugsweise offene, Halteklauen (64) für das Fangelement (21') aufweist.

8. Vorrichtung nach einem der Ansprüche 3 bis 7, **dadurch gekennzeichnet,** daß das Fangelement (21') mittels einer in die Bahn (20) eingeleiteten Rückzugspannung in den Halteklauen (64) festlegbar ist.

9. Vorrichtung nach Anspruch 7, **dadurch gekennzeichnet,** daß das Fangelement (21') ein Stab oder Rohr ist.

10. Vorrichtung nach einem der Ansprüche 3 bis 9, **dadurch gekennzeichnet,** daß der Mechanismus (14) als Halterung (H) eine Schubgabel (17) mit einem Querholm (63) aufweist, der von den Gabelzinkenenden (Halteklauen 64) zumindest einen der Höhe des Zuführkanals (5) im Einführbereich der Halterung (H) entsprechenden Abstand aufweist, daß die Gabelzinken (68) im Bereich der Seitenwände des Zuführkanals (5) quer durch diesen bewegbar sind, und daß die Schubgabel (17) an in der Vorrichtung schwenkbar gelagerten, durch wenigstens einen Zylinder (16) bewegbaren Winkelhebeln (15) angebracht ist.

11. Vorrichtung nach Anspruch 4, **dadurch gekennzeichnet,** daß die Bahn (20) aus verstärktem Gummi oder aus Kunststoff, aus einem Textil-, Metalldraht- oder Kunststoff-Gewebe, aus einem kunststoffbeschichteten Gewebe oder aus Metall besteht.

12. Vorrichtung nach einem der Ansprüche 3 bis 11, **dadurch gekennzeichnet,** daß in Wickelrichtung (30) vor dem Einlaß (8) eine Abweisevorrichtung (A) für die Bahn (20) vorgesehen ist.

13. Vorrichtung nach Anspruch 3, wobei die Bindemitteleintragvorrichtung (22) mit einem Bindemittelspeicher (28) in einem stationären Vorderteil (2) der Vorrichtung gelagert ist, und wobei die Bindemitteleintragvorrichtung (22) zum Eintragen und Anlegen des Bindemittels (29) an den Rollballenumfang mit einem Preßelement (9) in der Preßkammer (4) zusammenarbeitet und eine zur Drehung antreibbare Förderwalze (25) enthält, **dadurch gekennzeichnet,** daß die Eintragvorrichtung (22) zwischen einer Eintrag- und einer Rückzugstellung hin- und herbewegbar ist, und daß die Förderwalze (25) in der Eintragstellung an das Preßelement (9) anlegbar und dadurch antreibbar ist und mit dem Preßelement (9) einen über die Preßkammerbreite durchgehenden Einzugswalzenspalt für das Bindemittel (29) bildet.

14. Vorrichtung nach Anspruch 13, **dadurch gekennzeichnet,** daß die Förderwalze (25) vom auf einen Wickelkern aufgewickelten Bindemittel (29) selbst gebildet wird.

15. Vorrichtung nach den Ansprüchen 13 und 14, **dadurch gekennzeichnet,** daß die Förderwalze (25) in einem kippbar gelagerten Rahmen (23) angeordnet ist, an dem ein Schwenkantrieb, vorzugsweise ein Zylinder (27), angreift.

16. Vorrichtung nach einem der Ansprüche 13 bis 15, **dadurch gekennzeichnet,** daß die Förderwalze (25) im Einlaß (8) des Zuführkanals (5) an der in Wickelrichtung hinteren Einlaßseite angeordnet ist.

17. Vorrichtung nach einem der Ansprüche 13 bis 16, wobei parallel zur Förderwalze (25) eine Gegenwalze (26) vorgesehen ist, **dadurch gekennzeichnet,** daß die Gegenwalze (26) federnd gegen die Förderwalze (25) angepreßt ist.

18. Vorrichtung nach einem der Ansprüche 13 bis 17, **dadurch gekennzeichnet,** daß das im Bindemittelspeicher (28) vorliegende Bindemittel (29) entweder aus voneinander getrennten und überlappenden oder aus durch Sollbruchstellen (62) miteinander verbundenen Bindemittelabschnitten vorbestimmter, gleicher Länge besteht, und daß zum Trennen der Bindemittelabschnitte der Bindemittelspeicher (28) durch eine Bremsvorrichtung (60, 61) beaufschlagbar oder die Förderwalze (25) mit der Gegenwalze (26) als Bremsvorrichtung ausgebildet ist.

19. Vorrichtung nach einem der Ansprüche 13 bis 17, **dadurch gekennzeichnet,** daß eine Trennvorrichtung (72) für das Bindemittel (29) vorgesehen ist, die in der Rückzugstellung der Bindemitteleintragvorrichtung (22) zum Angriff am Bindemittel (22) bewegbar ist.

20. Vorrichtung nach Anspruch 3, **dadurch gekennzeichnet,** daß das Trennelement (T) eine starre Rechenwand (45) ist, die in der Staustellung im wesentlichen parallel zu sich selbst durch den Einlaß (8) in die Preßkammer (4) verlagerbar ist.

21. Vorrichtung nach Anspruch 3, **dadurch gekennzeichnet,** daß zusätzlich zum Trennelement (T) im Zuführkanal (5) im Bereich der Preßkammer (4) ein in die Preßkammer (4) einfahrbares Trennelement (T1) vor der Öffnung der Klappe (12) vorgesehen ist.

22. Vorrichtung nach den Ansprüchen 3, 4, 20 oder 21, mit einem durch Wände begrenzten Zuführkanal (5) für Erntegut (G), in dem ein zur Drehung angetriebenes Förderorgan für das Erntegut vorgesehen ist, **dadurch gekennzeichnet,** daß das Förderorgan eine Preßwalze (7) mit einem Walzengrundkörper (35) und wenigstens einer Schar (S, S1) in Längsrichtung des Walzengrundkörpers mit Zwischenabständen (a) nebeneinanderliegender Preßflügel (41) ist, deren jeder eine in Drehrichtung vorne liegende, mit konvexer Krümmung gegen die Drehrichtung zurückweichende Preßfläche (42) besitzt, und daß die Preßflachen (42) benachbarter Preßflügel (41) in Umfangsrichtung zueinander derart versetzt sind, daß die Preßflächen (42) in einer Abwicklung des Mantels des Walzengrundkörpers (35) ein pfeilförmiges Muster mit in Drehrichtung weisender Pfeilspitze bilden.

23. Vorrichtung nach Anspruch 22, **dadurch gekennzeichnet,** daß in Umfangsrichtung des Walzengrundkörpers (35) verteilt mehrere Preßflügelscharen (S, S1) vorgesehen sind.

24. Vorrichtung nach den Ansprüchen 22 und 23, **dadurch gekennzeichnet,** daß der Walzengrundkörper (35) außerhalb des Zuführkanals (5) liegt, und daß die Preßflügel (41) durch zu ihren Drehebenen parallele Schlitze (40) in der Wand (34) in den Zuführkanal (5) greifen.

25. Vorrichtung nach den Ansprüchen 22 bis 24, **dadurch gekennzeichnet,** daß die Krümmung jeder Preßfläche (42) einen Krümmungsverlauf aufweist, bei dem beim Austreten des Preßflügels (41) aus dem Zuführkanal (5) im Durchtrittspunkt der Preßfläche (42) durch die Wand (34) des Zuführkanals (5) eine Tangente (t) an die Preßfläche (42) mit der Wand (34) einen spitzen Winkel einschließt.

26. Vorrichtung nach den Ansprüchen 22 bis 25, **dadurch gekennzeichnet,** daß im Bereich der Preßwalze (7) die Wand (34) des Zuführkanals (5) parallel zum Walzengrundkörper (35) und - dem Erntegut (G) zugewandt - mit einem Bogen (B) verläuft, und daß die Achse (36) des Walzengrundkörpers in Förderrichtung des Ernteguts (G) durch den Zuführkanal (5) im vorderen Teil des Bogens (B) angeordnet ist.

27. Vorrichtung nach den Ansprüchen 22 bis 26, **dadurch gekennzeichnet,** daß die Preßwalze (7) relativ zur Wand (34) des Zuführkanals (5) unter dem Reaktionsdruck des Ernteguts (G) nachgebend beweglich gelagert, vorzugsweise durch Federn (39) in eine Grundstellung vorgespannt, ist.

**Claims**

1. Method for producing bound round bales of crop material in the compression chamber of a mobile apparatus, in particular a round-bale baler, fed continuously with a strand of crop material, the strand of crop material being introduced through a feed channel into the compression chamber and rolled therein in a spiral to form the round bale which is thereupon bound in a binding material and then expelled, and the continuously fed strand of crop material being separated from the finished round bale at least during the closure of the binding material around the circumference of the finished round bale by closure of the inlet to the compression chamber and the crop material being temporarily stored with compression, characterized in that temporary storage is carried out in two adjoining steps, that after the closure of the binding material at the end of the first step, the inlet is opened again and, in a second step, with a finished round bale at least partially still in the compression chamber, temporary storage is carried out in the compression chamber separately from the round bale until the compression chamber is closed.

2. Method according to Claim 1, characterized in that, in the second step, the crop material is temporarily stored with compression.

3. Apparatus for processing crop material, in particular a round-bale baler, having a crop-material feed channel (5) leading to a rolling and compression chamber (4) whose inner circumference is bounded by side walls and compression elements driven in the rolling direction, having an expulsion flap (12) of the compression chamber (4) which expulsion flap can be moved to and fro between a closed and an open position, having a first conveying member at the beginning of the feed channel (5), having a second conveying member in the course of the feed channel between the first conveying member and an inlet (8) leading to the compression chamber (4), having a binding-material feed apparatus (22) which, in the rolling direction, is arranged downstream of the inlet (8), and having a separating element (T) which can be moved transversely through the feed channel (5) between the second conveying member and the inlet (8) out of a passive position outside the feed channel (5) into a blocking position, characterized in that the second conveying member is a continuously driven compression roll (7) equipped with compression vanes (41), and that the separating element (T) is separated therefrom and, in the blocking position, can be moved with the crop material (G) through the inlet (8) into the compression chamber (4).

4. Apparatus according to Claim 3, characterized in that the separating element (T) is a flexible web (20) which is held so as to allow more to be pulled and of which, in the blocking position, a longitudinal portion is supported between mutually opposite walls (32, 34) of the feed channel (5), and that the length of the longitudinal portion can be increased by pulling more of the web (20) with the free end (21) fixed until a web loop reaching into the compression chamber (4) is formed.

5. Apparatus according to Claims 3 and 4, characterized in that the web (20) is stored, preferably wound up, upstream - in the rolling direction (30) - of the inlet (8) of the feed channel (5) to the compression chamber (4), that the free end (21) of the web (20) is fixed releasably in a holding apparatus (H) and that the holding apparatus (H) is attached to a mechanism (14) and, with the latter and the free end (21), can be moved out of a position at a wall (34) of the feed channel as far as the opposite wall (32) of the feed channel (5).

6. Apparatus according to one of Claims 3 to 5, characterized in that that longitudinal portion of the web (20) which blocks the feed channel (5) can be supported between support points in the feed channel by tensioning the web (20) or by resting against the outer circumference of the round bale (R) in the compression chamber (4).

7. Apparatus according to one of Claims 3 to 6, characterized in that a rigid catching element (21') is fixed in the free end (21) of the web (20), and that the holding apparatus (H) has preferably open holding claws (64) for the catching element (21').

8. Apparatus according to one of Claims 3 to 7, characterized in that the catching element (21') can be fixed in the holding claws (64) by means of a pull-back tension directed into the web (20).

9. Apparatus according to Claim 7, characterized in that the catching element (21') is a rod or tube.

10. Apparatus according to one of Claims 3 to 9, characterized in that the mechanism (14) has as holding apparatus (H) a thrust fork (17) having a transverse bar (63) which is at a distance from the fork-prong ends (holding claws 64) which corresponds at least to the height of the feed channel (5) in the insertion region of the holding apparatus (H), that, in the region of the side walls of the feed channel (5), the fork prongs (68) can be moved transversely through said feed channel, and that the thrust fork (17) is attached to bent levers (15) which are swivel-mounted in the apparatus and can be moved by at least one cylinder (16).

11. Apparatus according to Claim 4, characterized in that the web (20) is composed of reinforced rubber or of plastic, of a textile fabric, metal wire fabric or synthetic fabric, of a plastic-coated fabric or of metal.

12. Apparatus according to one of Claims 3 to 11, characterized in that a deflection apparatus (A) for the web (20) is provided upstream of the inlet (8), in the rolling direction (30).

13. Apparatus according to Claim 3, the binding-material feed apparatus (22) being mounted with a binding-material store (28) in a fixed front part (2) of the apparatus, and the binding-material feed apparatus (22) for feeding in and applying the binding material (29) to the round-bale circumference cooperating with a compression element (9) in the compression chamber (4) and containing a conveying roll (25) which can be driven to rotate, characterized in that the feed apparatus (22) can be moved back and forth between a feed and a withdrawn position, and that, in the feed position, the conveying roll (25) can be placed against the compression element (9) and can thereby be driven and, together with the compression element (9) forms a draw-in nip for the binding material (29), said draw-in nip being continuous over the width of the compression chamber.

14. Apparatus according to Claim 13, characterized in that the conveying roll (25) is formed by the binding material (29) itself, which is wound onto a winding core.

15. Apparatus according to Claims 13 and 14, characterized in that the conveying roll (25) is arranged in a tiltably mounted frame (23) on which there acts a pivot drive, preferably a cylinder (27).

16. Apparatus according to one of Claims 13 to 15, characterized in that the conveying roll (25) is arranged in the inlet (8) of the feed channel (5) on the downstream inlet side in the rolling direction.

17. Apparatus according to one of Claims 13 to 16, a mating roll (26) being provided parallel to the conveying roll (25), characterized in that the mating roll (26) is pressed resiliently against the conveying roll (25).

18. Apparatus according to one of Claims 13 to 17, characterized in that the binding material (29) in the binding-material store (28) comprises either separate and overlapping binding-material portions or binding-material portions connected together by predetermined breaking points (62), in each case of predetermined, equal length, and that, for the purpose of separating the binding-material portions, the binding-material store (28) can be acted upon by a braking apparatus (60, 61) or the conveying roll (25) together with the mating roll (26) is designed as a braking apparatus.

19. Apparatus according to one of Claims 13 to 17, characterized in that a separating apparatus (72) for the binding material (29) is provided, which apparatus can be moved to act on the binding material (22) in the withdrawn position of the binding-material feed apparatus (22).

20. Apparatus according to Claim 3, characterized in that the separating element (T) is a rigid rake wall (45) which, in the blocking position, can be displaced essentially parallel to itself through the inlet (8) into the compression chamber (4).

21. Apparatus according to Claim 3, characterized in that in addition to the separating element (T) in the feed channel (5), a separating element (T1) which can be driven into the compression chamber (4) is provided in the region of the compression chamber (4), in front of the opening of the flap (12).

22. Apparatus according to Claims 3, 4, 20 or 21, having a feed channel (5) for crop material (G), which feed channel is bounded by walls and in which a conveying member, driven to rotate, for the crop material is provided, characterized in that the conveying member is a compression roll (7) having a basic roll body (35) and at least one set (S, S1) of compression vanes (41) which are situated next to one another with intermediate spacings (a) in the longitudinal direction of the basic roll body and each of which has a compression surface (42) lying to the fore in the direction of rotation and falling back with a convex curvature counter to the direction of rotation, and that the compression surfaces (42) of adjacent compression vanes (41) are mutually offset in the circumferential direction in such a way that, in a development of the shell of the basic roll body (35), the compression surfaces (42) form an arrow-shaped pattern with an arrow tip pointing in the direction of rotation.

23. Apparatus according to Claim 22, characterized in that a plurality of compression vane sets (S, S1) are provided distributed in the circumferential direction of the basic roll body (35).

24. Apparatus according to Claims 22 and 23, characterized in that the basic roll body (35) is situated outside the feed channel (5), and that the compression vanes (41) reach into the feed channel (5) through slots (40) in the wall (34) which are parallel to their planes of rotation.

25. Apparatus according to Claims 22 to 24, characterized in that the curvature of each compression surface (42) has a curve trend such that, as the compression vane (41) leaves the feed channel (5), a tangent (t) to the compression surface (42) at the point where the compression surface (42) passes through the wall (34) of the feed channel (5) encloses an acute angle with the wall (34).

26. Apparatus according to Claims 22 to 25, characterized in that, in the region of the compression roll (7), the wall (34) of the feed channel (5) runs parallel to the basic roll body (35) and - facing the crop material (G) - in an arc (B), and that, in the conveying direction of the crop material (G) through the feed channel (5), the axle (36) of the basic roll body is arranged in the forward part of the arc (B).

27. Apparatus according to Claims 22 to 26, characterized in that the compression roll (7) is mounted movably, yielding under the reaction pressure of the crop material (G), relative to the wall (34) of the feed channel (5), preferably being prestressed by springs (39) into a normal position.

## Revendications

1. Procédé de fabrication de bottes cylindriques de produits récoltés liées dans la chambre de compression d'un dispositif mobile alimenté en continu d'un andain de produits récoltés, en particulier d'une presse à mettre en bottes cylindriques, l'andain de produits récoltés étant introduit par un canal d'amenée dans la chambre de compression dans laquelle il est enroulé en spirale pour former la botte cylindrique qui est ensuite liée dans un empaquetage, puis éjectée, et l'andain de produits récoltés amené en continu étant séparé de la botte cylindrique terminée, du moins pendant la fermeture de l'empaquetage autour de la périphérie de la botte terminée, par la fermeture de l'entrée vers la chambre de compression, et les produits récoltés étant entreposés avec compression, **caractérisé en ce** que, en deux phases consécutives, l'entreposage est réalisé de telle façon qu'après la fermeture de l'empaquetage à la fin de la première phase, l'entrée est à nouveau ouverte et que, en une seconde phase, lorsque la botte cylindrique terminée se trouve encore au moins partiellement dans la chambre de compression, l'entreposage se fait séparément de ladite botte cylindrique dans la chambre de compression jusqu'à la fermeture de ladite chambre de compression.

2. Procédé selon la revendication 1, caractérisé en ce que les produits récoltés sont entreposés avec compression pendant une seconde phase.

3. Dispositif pour le traitement des produits récoltés, en particulier botteleuse, comprenant un canal d'amenée de produits récoltés (5) vers une chambre d'enroulement et de compression (4) dont la périphérie intérieure est délimitée par des parois latérales et par des éléments de compression entraînés dans le sens de l'enroulement, une porte d'évacuation (12) de la chambre de compression (4) pouvant être animée d'un mouvement alternatif entre une position de fermeture et une position d'ouverture, un premier organe de transport au début du canal d'amenée (5), un second organe de transport dans la suite du canal d'amenée, entre le premier organe de transport et une entrée (8) vers la chambre de compression (4), un dispositif d'alimentation de matériau d'empaquetage (22) placé dans le sens de l'enroulement en aval de l'entrée (8), et un élément séparateur (T) qui peut être déplacé transversalement au travers du canal d'amenée (5), entre le second organe de transport et l'entrée (8), d'une position passive à l'extérieur dudit canal d'amenée (5) dans une position de retenue, **caractérisé en ce** que le second organe de transport est un rouleau compresseur (7) équipé de comprimeurs ailés (41) et entraîné en continu, que l'élément séparateur (T) est séparé de celui-ci et que, dans la position de retenue, il peut être amené, conjointement avec le produit récolté (G), dans la chambre de compression (4) par l'ouverture (8).

4. Dispositif selon la revendication 3, caractérisé en ce que l'élément séparateur (T) est une bande (20) flexible étirable dont une section longitudinale s'appuie, dans la position de retenue, entre des parois opposées (32, 34) du canal d'amenée (5), et que la longueur de la section longitudinale peut être augmentée en tirant la bande (20), dont l'extrémité (21) est immobilisée, jusqu'à la formation d'une boucle de bande qui s'étend dans la chambre de compression (4).

5. Dispositif selon l'une des revendications 3 et 4, caractérisé en ce que - vu dans le sens d'enroulement (30) - la bande (20) est stockée, de préférence enroulée, en amont de l'entrée (8) du canal d'amenée (5) conduisant à la chambre de compression (4), que l'extrémité libre (21) de la bande (20) est bloquée de manière amovible dans une fixation (H), et que la fixation (H) est montée sur un mécanisme (14) et peut être déployée, avec celui-ci ainsi qu'avec l'extrémité libre (21), à partir d'une position à l'une des parois (34) du canal d'amenée jusqu'à la paroi opposée (32) dudit canal d'amenée (5).

6. Dispositif selon l'une des revendications 3 à 5, caractérisé en ce que la section longitudinale de la bande (20) qui bloque le canal d'amenée (5) peut s'appuyer entre des points d'appui dans le canal d'amenée par tension de la bande (20) ou dans la chambre de compression (4) par application contre la périphérie extérieure de la botte cylindrique (R).

7. Dispositif selon l'une des revendications 3 à 6, caractérisé en ce qu à l'extrémité libre (21) de la bande (20) est fixé un élément d'arrêt (21'), et que la fixation (H) présente des griffes de retenue (64), de préférence ouvertes, pour l'élément d'arrêt (21').

8. Dispositif selon l'une des revendications 3 à 7 caractérisé en ce que l'élément d'arrêt (21') peut être bloqué dans les griffes de retenue (64) au moyen d'une tension de rappel exercée sur la bande (20).

9. Dispositif selon la revendication 7, caractérisé en ce que l'élément d'arrêt (21') est une barre ou un tube.

10. Dispositif selon l'une des revendications 3 à 9, caractérisé en ce que le mécanisme (14) comprend comme fixation (H) une fourche rétractable (17) avec une barre transversale (63) laquelle se trouve à une distance des extrémités des fourchons (griffes de retenue 64) qui correspond au moins à la hauteur du canal d'amenée (5) dans la région d'introduction de la fixation (H), que les fourchons (68) peuvent être déplacés dans la région des parois latérales du canal d'amenée (5) transversalement au travers de celui-ci, et que la fourche rétractable (17) est fixée sur des leviers coudés (15) montés de manière pivotante dans le dispositif et pouvant être déplacés par au moins un vérin (16).

11. Dispositif selon la revendication 4, caractérisé en ce que la bande (20) est constituée de caoutchouc renforcé ou de matière plastique, d'un tissu textile, d'une toile métallique ou d'un tissu synthétique, d'un tissu plastifié ou de métal.

12. Dispositif selon l'une des revendications 3 à 11, caractérisé en ce que, dans le sens d'enroulement (30) en avant de l'entrée (8), il est prévu un dispositif déflecteur (A) pour la bande (20).

13. Dispositif selon la revendication 3, dans lequel le dispositif d'alimentation de matériau d'empaquetage (22) est monté, avec un réservoir de matériau d'empaquetage (28), dans une partie antérieure stationnaire (2) du dispositif et dans lequel le dispositif d'alimentation de matériau d'empaquetage (22) coopère, pour l'introduction et pour l'application du matériau d'empaquetage (29) contre la périphérie de la botte cylindrique, avec un élément de pression (9) dans la chambre de compression (4) et comprend un rouleau transporteur (25) pouvant être entraîné en rotation, caractérisé en ce que le dispositif d'alimentation (22) peut être animé d'un mouvement alternatif entre une position d'introduction et une position de rappel, que dans la position d'introduction le rouleau transporteur (25) peut être appliqué contre l'élément de pression (9) et de ce fait entraîné, et qu'il forme avec l'élément de pression (9) une fente de rouleau d'alimentation pour le matériau d'empaquetage (29) qui s'étend sur toute la largeur de la chambre de compression.

14. Dispositif selon la revendication 13, caractérisé en ce que le rouleau transporteur (25) est constitué par le matériau d'empaquetage (29) lui-même qui est enroulé sur un axe de bobinage.

15. Dispositif selon l'une des revendications 13 et 14, caractérisé en ce que le rouleau transporteur (25) est monté dans un cadre (23) basculant sur lequel agit un mécanisme de pivotement, de préférence un vérin (27).

16. Dispositif selon l'une des revendications 13 à 15, caractérisé en ce que le rouleau transporteur (25) est placé dans l'entrée (8) du canal d'amenée (5), du côté de l'admission postérieur dans le sens d'enroulement.

17. Dispositif selon l'une des revendications 13 à 16 dans lequel est prévu un rouleau conjugué (26) orienté parallèlement au rouleau transporteur (25), caractérisé en ce que le rouleau conjugué (26) est appliqué élastiquement contre le rouleau transporteur (25).

18. Dispositif selon l'une des revendications 13 à 17, caractérisé en ce que le matériau d'empaquetage (29) disponible dans le réservoir de matériau d'empaquetage (28) se compose de sections de matériau d'une même longueur prédéterminée qui sont soit séparées les unes des autres et se recouvrent mutuellement, soit reliées entre elles par des points destinés à la rupture (62), et que, pour la séparation des sections de matériau d'empaquetage, le réservoir de materiau d'empaquetage (28) peut être commandé par un dispositif de frein (60, 61) ou que le rouleau transporteur (25) avec le rouleau conjugué (26) est conformé en mécanisme de freinage.

19. Dispositif selon l'une des revendications 13 à 17, caractérisé en ce qu'il comprend un dispositif de séparation (72) pour le matériau d'empaquetage (29) qui, dans la position de rappel du dispositif d'alimentation de matériau d'empaquetage (22), peut être déplacé en vue d'attaquer le matériau d'empaquetage (29).

20. Dispositif selon la revendication 3, caractérisé en ce que l'élément séparateur (T) est une paroi rigide en forme de râteau (45) qui, dans la position de retenue, peut être déplacée sensiblement parallèlement à elle-même par l'entrée (8) dans la chambre de compression (4).

21. Dispositif selon la revendication 3, caractérisé en ce que, en plus de l'élément séparateur (T), il est prévu dans le canal d'amenée (5), dans la région de la chambre de compression (4), devant la porte d'évacuation (12), un élément séparateur (T1) qui peut être inséré dans la chambre de compression (4).

22. Dispositif, selon l'une des revendications 3, 4, 20 ou 21, avec un canal d'amenée (5) pour les produits récoltés (G) délimité par des parois, dans lequel est prévu un organe de transport pour les produits récoltés entraîné en rotation, caractérisé en ce que l'organe de transport est un rouleau compresseur (7) avec un corps de base de rouleau 35 et au moins un système (S, S1) de comprimeurs ailés (41) juxtaposés à des intervalles (a) dans le sens longitudinal du corps de base du rouleau et dont chacun comporte une surface de compression (42) située en avant dans le sens de rotation et reculant avec une courbure convexe dans la direction opposée au sens de rotation, et que les surfaces de compression (42) des comprimeurs ailés (41) voisins sont décalées les unes par rapport aux autres dans le sens circonférentiel de telle façon que les surfaces de compression (42) forment, dans une projection développée de l'enveloppe du corps de base (35) du rouleau, un dessin en forme de flèche dont la pointe est dirigée dans le sens de rotation.

23. Dispositif selon la revendication 22, caractérisé en ce qu'il comprend une pluralité de systèmes de comprimeurs ailés (S, S1) répartis dans le sens circonférentiel du corps de base (35) du rouleau.

24. Dispositif selon l'une des revendications 22 et 23, caractérisé en ce que le corps de base (35) du rouleau se situe en dehors du canal d'amenée (5) et que les comprimeurs ailés (41) s'engagent dans le canal d'amenée (5), à travers des fentes (40) ménagées dans la paroi (34) et orientées parallèlement à leurs plans de rotation.

25. Dispositif selon l'une des revendications 22 à 24, caractérisé en ce que la courbure de chaque surface de compression (42) présente une allure de courbe telle que, lorsque le comprimeur ailé (41) sort du canal d'amenée (5) au point de passage de ladite surface de compression (42) par la paroi (34) du canal d'amenée (5), une tangente (t) à la surface de compression (42) forme avec la paroi (34) un angle aigu.

26. Dispositif selon l'une des revendications 22 à 25, caractérisé en ce que, dans la région du rouleau compresseur (7), la paroi (34) du canal d'amenée (5) s'étend parallèlement au corps de base (35) du rouleau et forme - en direction des produits récoltés (G) - un arc (B), et que l'axe (36) du corps de base du rouleau est disposé, vu dans le sens d'avancement des produits récoltés (G) dans le canal d'amenée (5), dans la section antérieure de l'arc (B).

27. Dispositif selon l'une des revendications 22 à 26, caractérisé en ce que le rouleau compresseur (7) monté de manière à pouvoir se déplacer élastiquement, sous l'action de la pression de réaction des produits récoltés (G), par rapport à la paroi (34) du canal d'amenée (5), est de préférence précontraint dans une position de base par des ressorts (39).

FIG.1

FIG. 2

EP 0 311 775 B1

FIG.3

29  29'  R  ü  31'  18  14  16  20  Z  G  E

11 10 25    27 21 T 28 32
22

EP 0 311 775 B1

FIG. 4

EP 0 311 775 B1

FIG.5

EP 0 311 775 B1

FIG.6

FIG. 7

FIG. 8

FIG.9

FIG.10

FIG.11

FIG.12